# EUROPÄISCHE PATENTSCHRIFT

(11) **EP 0 987 201 B1**
(45) Veröffentlichungstag und Bekanntmachung des Hinweises auf die Patenterteilung: **07.08.2002**
(21) Anmeldenummer: 99117636.3
(22) Anmeldetag: 08.09.1999
(51) Int. Cl.: B65G 33/26, A01K 5/00

(54) **Klinge an einer Mischschnecke, insbesondere in einen Futtermischwagen**
Cutterblade for a mixing screw, particularly in a fodder-mixing trailer
Lame de coupe pour vis mélangeuse, particulièrement dans une remorque mélangeuse de fourage

(30) Priorität: 11.09.1998 DE 19841673
(43) Veröffentlichungstag der Anmeldung: 22.03.2000
(73) Patentinhaber: Frielinghaus GmbH, 58256 Ennepetal (DE)
(72) Erfinder: Braun, Wolfgang, 58256 Ennepetal (DE)
(74) Vertreter: Patentanwälte Rehberg + Hüppe

(56) Entgegenhaltungen:
- EP-A- 0 612 465
- EP-A- 0 865 727
- EP-A- 0 958 735
- US-A- 4 463 907

## Beschreibung

Die Erfindung betrifft eine Klinge für die Befestigung an einer im Randbereich mit Löchern versehenen Förderwendel einer Mischschnecke, insbesondere einer Mischschnecke in einem Futtermischwagen, wobei die Klinge eine Durchbrechung für ein Befestigungsmittel und mindestens zwei Schneiden oder Schneidenabschnitte aufweist.

Landwirtschaftliche Futtermischwagen weisen einen Aufnahmeraum für das zu mischende Futter auf, in welchem eine oder mehrere angetriebene Mischschnecken mit Achse und Förderwendel vorgesehen sind. Im Bereich des freien Rands der Mischschnecke bzw. der Förderwendel befinden sich in regelmäßigen Abständen Löcher. An jedem Loch wird eine Klinge befestigt. Jede Klinge besitzt mindestens eine Durchbrechung, so daß sie mit einem Befestigungsmittel, in der Regel einer Schraube mit Mutter, so in den Löchern im Randbereich der Förderwendel befestigbar ist, daß ihre Schneide bzw. eine ihrer Schneiden über den freien Randbereich der Förderwendel nach außen vorsteht. Die für diesen Einsatzzweck bestimmten Klingen besitzen meist mehrere Schneiden, um die Klingen mehrfach, in unterschiedlicher Relativanordnungen zu der Förderwendel benutzen und einsetzen zu können. Die Klingen sind dabei kraftschlüssig auf der Förderwendel gehalten.

In solchen Futtermischwagen werden Futterstoffe der verschiedensten Art, beispielsweise auch Strohballen, Silage und andere, auch unterschiedliche Futtermittel, geworfen. Der Futtermischwagen hat die Aufgabe, diese Futterstoffe mit Hilfe der Klingen zu zerschneiden, also zu zerkleinern, und gleichzeitig zu vermischen. Beim Betrieb der Mischschnecke bzw. Mischschnecken in dem Futtermischwagen ergibt sich für das zu mischende Futter neben der Zerkleinerungswirkung auch eine Förderwirkung, die in erster Linie auf die Mischschnecke und deren Antrieb zurückzuführen ist.

Nach Erreichen einer gewissen Lebensdauer sind die Schneiden der Klingen stumpf, so daß die Schnittkräfte ansteigen und keine befriedigenden Schnittergebnisse mehr geliefert werden. Wenn es sich bei der Klinge um eine solche mit mehreren Schneiden handelt, wird zum Wechseln der über den freien Randbereich der Wendel nach außen vorstehenden Schneide, d. h. der Schneide, die im Eingriff steht, das Befestigungsmittel gelöst und die Klinge in eine andere Relativlage gebracht, so daß eine andere Schneide zum Einsatz kommen kann. Nachdem nun die Schneide gewechselt wurde, wird das Befestigungsmittel wieder angezogen, so daß sich die Klinge in einer wiederum definierten Lage relativ zu dem Rand der Förderwendel befindet und die Mischschnecke wieder benutzt werden kann. Die Klingen sind kraftschlüssig auf der Förderwendel festgelegt. Es besteht die Gefahr, daß sich die Klingen um die Achsen ihrer Befestigungsmittel beim Auftreten von Stößen unkontrolliert verdrehen, sodaß die Schneiden der Klingen in ungünstige Winkellagen geraten. Der Kraftbedarf steigt damit weiter an.

Die größten Schwierigkeiten beim gezielten Verdrehen der Klingen bestehen darin, daß hierzu in den Futtermischwagen geklettert werden muß, das heißt, daß man auf einer Vielzahl einzelner Klingen steht. Hierdurch besteht eine hohe Verletzungsgefahr. Zusätzlich sind die Befestigungsmittel fast immer korrodiert, so daß sie nicht mehr zerstörungslos gelöst werden können. Aus diesem Grunde ist das Verdrehen oder Auswechseln der Klingen im Futtermischwagen eine sehr zeitaufwendige Angelegenheit, die je nach Größe des Wagens vier bis acht Stunden dauert und zusätzlich sehr unfallträchtig ist. In der Praxis ist es nahezu unmöglich, ein Verdrehen oder Wechseln der Klingen ohne Auftreten von Schnittverletzungen durchzuführen.

Diese Problematik führt dazu, daß in der Praxis die Klingen oft nicht mehr gedreht, sondern in der einmal montierten Stellung weiter benutzt werden, bis der Futtermischwagen nicht mehr bestimmungsgemäß arbeitet, d. h. bis über eine sinnvolle Verschleißgrenze der Klingen hinaus. Dann werden die Befestigungsmittel der Klingen mit einer Schleifhexe o. dgl. abgetrennt. Die Klingen und Befestigungsmittel werden anschließend durch neue ersetzt. Bei dieser Arbeitsweise werden die Schneiden der Klingen, ausgehend von einer rechteckigen Klingengeometrie von vier Schneiden, nur zu etwa 25 % ihrer möglichen Lebensdauer genutzt.

Eine Klinge für eine Mischschnecke der eingangs beschrieben Art ist aus der EP 0 612 465 A1 bekannt. Die Mischschnecke weist eine Welle mit darauf angeordneter unterteilter Förderwendel auf. Im Randbereich der Förderwendel ist eine Vielzahl von rechteckigen Klingen so angeordnet, daß die Klingen mit einer ihrer Schneiden über den freien Randbereich der Förderwendel nach außen vorstehen. Die Druckschrift befaßt sich nicht im einzelnen mit der Befestigung der Klingen an der Wendel.

Aus der EP 0 865 727 A2 ist eine Klinge für eine Mischschnecke an einem Futtermischwagen bekannt, die einen weitgehend ebenen Grundkörper aus Stahl aufweist und ansonsten mindestens eine der Befestigung im Randbereich der Mischschnecke dienende Durchbrechung und mindestens eine Schneide besitzt. Der Grundkörper weist mindestens drei Einprägungen auf, die drei Auflager für den Grundkörper an der gewölbten Oberfläche der Mischschnecke bilden und gegenüber der Haupterstreckungsebene des Grundkörpers in etwa senkrechter Richtung soweit vorstehen, daß bei der Befestigung der Klinge im Randbereich der Mischschnecke nur die Auflage am Grundkörper in Kontakt zu der gewölbten Oberfläche der Mischschnecke kommen. Die durch die Einprägungen gebildeten Auflager befinden sich damit auf relativ kleinem Radius um die der Befestigung dienende mittige Durchbrechung der Klinge herum. Die drei Auflager sind nicht den Schneiden oder Schneidenabschnitte der Klinge zugeordnet, sondern allein der gewölbten Oberfläche der Förderwendel. Durch die drei Auflager oder Punkte wird eine stabile kraftschlüssige Auflagerung der Klinge im Randbereich der Mischschnecke auf der unebenen Oberfläche der Mischschnecke ermöglicht, so daß mit dieser Befestigung eine die Bruchgefahr begünstigende Verspannung der Klinge an der Förderwendel nicht eintritt. Die drei Auflager legen eine Ebene präzise fest, in der die Haupterstreckungsebene des Grundkörpers der Klinge gegenüber der gewölbten Oberfläche der Mischschnecke angeordnet ist. Die formschlüssige verdrehgesicherte Lagerung der Klinge an der Förderwendel der Förderschnecke wird durch die unrunde Ausbildung der mittigen Durchbrechung der Klinge und der Löcher im Rand der Wendel der Mischschnecke über ein Befestigungsmittel, beispielsweise eine Schraube erreicht, welches ebenfalls unrunden Querschnitt besitzt. Über diese mittige Befestigung wird der Formschluß und die verdrehgesichterte Lagerung der Klinge an der Förderwendel der Mischschnecke erreicht, wobei gleichzeitig auf diese Weise der Anstellwinkel der jeweils in Arbeit befindlichen Schneide gesichert ist. Diese formschlüssige verdrehgesicherte Lagerung der Klinge hat den Nachteil, daß das mittig angreifende Befestigungsmittel vollständig gelöst und wieder festgezogen werden muß, um eine andere Schneide der Klinge in Arbeitsstellung zu bringen.

In der EP 0 958 735 A1 ist eine Mischschnecke vorgeschlagen, die eine gleichmäßige Nutzung der Schneiden der Klingen ohne die Notwendigkeit aufwendiger Demontagearbeiten gewährleistet. Dies wird dadurch erreicht, daß die Befestigungsmittel so ausgebildet sind, daß die Klingen im Betriebszustand der Mischschnecke um das jeweilige Befestigungsmittel durch im Betrieb der Mischschnecke auftretende Widerstände verdrehbar sind. Die Klingen werden also nicht mehr wie bisher fest auf der Förderwendel angeordnet, sondern es wird vielmehr gewollt ein Verdrehen der Klingen im Betrieb der Mischschnecke gestattet. Dadurch ist es nicht mehr erforderlich, die Befestigungsmittel für das Wechseln der im Eingriff stehenden Schneide zu lösen und anschließend wieder anzuziehen. Die Klingen drehen sich selbsttätig, d.h. ohne weitere Maßnahmen des Bedieners, allein durch die im Betrieb der Mischschnecke an den Klingen auftretenden Widerstände, wobei die Größe des für die Verdrehung der Klingen erforderlichen Widerstands frei wählbar ist. Ohne erforderliche Demontagearbeiten wird die Schneide oder die Schneiden gleichmäßig abgenutzt. Dieser Gedanke ist für runde Klingen bedeutungsvoll, bereitet aber bei Klingen mit mehreren gerade verlaufenden Schneiden Schwierigkeiten, weil die Anstellwinkel dieser Schneiden ungünstige Werte annehmen können. Bei einem unvermeidlichen Verschleiß der Schneiden der Klinge erhöht sich der Kraftbedarf. Dies kann dazu führen, daß sich die Klingen um die Achse ihres Befestigungsmittels unkontrolliert verdrehen. Damit steigt der Kraftbedarf noch weiter an, bis schließlich die Funktion der Mischschnecke verloren geht.

Der Erfindung liegt die Aufgabe zugrunde, eine Klinge der eingangs beschriebenen Art für eine Mischschnecke bereitzustellen, die einen vergleichsweise einfachen Klingenwechsel zur Nutzung mehrerer Schneiden oder Schneidenabschnitte an einer Klinge ermöglicht, ohne daß die Gefahr besteht, daß sich die Klinge unkontrolliert verdrehen kann und der Kraftbedarf hierdurch ansteigt.

Erfindungsgemäß wird dies dadurch erreicht, daß die Klinge zumindest auf der der Förderwendel zugekehrten Seite mehrere vorspringende und über die Klinge verteilt angeordnete Anschläge aufweist, die in Zuordnung zu den Schneiden oder Schneidenabschnitten der Klinge unter Festlegung eines für das Schneiden günstigen Anstellwinkels der Schneiden oder Schneidenabschnitte der Klinge verteilt angeordnet sind und von denen sich jeweils einer in der montierten Stellung an der Förderwendel formschlüssig verdrehgesichert abstützt und so den Anstellwinkel der jeweils in Arbeit befindlichen Schneide sichert.

Die Erfindung geht von dem Gedanken aus, eine sinnvolle Nutzungsmöglichkeit für eine Klinge zu schaffen, die mehrere Schneiden oder Schneidenabschnitte aufweist und bei der ein und dieselbe Klinge so gewechselt bzw. verstellt werden kann, daß die Schneiden oder Schneidenabschnitte nacheinander genutzt werden können, bis letztlich sämtliche Schneiden oder Schneidenabschnitte durch entsprechend langen Gebrauch stumpf geworden sind und dann eine insgesamt neue Klinge einzusetzen ist. Der Wechsel von der Nutzung einer Schneide oder eines Schneidenabschnittes einer Klinge zu einer anderen Schneide oder einem anderen Schneidenabschnitt derselben Klinge wird möglich, ohne daß die Gefahr besteht, daß die Schneiden der Klinge ungünstige Winkellagen einnehmen können. Hierzu wird zunächst einmal jede Klinge mit einer Mehrzahl von Anschlägen versehen, wobei die Anzahl der Anschläge der Anzahl der nutzbaren Schneiden oder Schneidenabschnitte an der Klinge entsprechen. Die Anordnung der Anschläge geschieht in Zuordnung zu den Schneiden oder Schneidenabschnitten, und zwar derart, daß sich der jeweils einer Schneide oder einem Schneidenabschnitt zugeordnete Anschlag an der Förderwendel der Mischschnecke so abstützt, daß die Klinge an einer Drehung um das Befestigungsmittel gehindert ist und gleichzeitig der optimale Anstellwinkel der Schneide oder des Schneidenabschnittes gesichert ist. Die Einhaltung dieses Anstellwinkels ist für ein ordnungsgemäßes Arbeiten der Klinge bzw. der Schneide der Klinge wichtig, damit die Klinge nicht durch Widerstandskräfte, die beim Arbeiten der Mischschnecke auftreten, selbsttätig verdreht wird. Durch die Anschläge sind die Klingen formschlüssig auf der Förderwendel gelagert. Die Anschläge sind in der Regel nur auf einer Seite der Klinge vorgesehen, und zwar auf der Seite, die der Förderwendel zugekehrt ist. Für die Abstützung dieser Anschläge an der Förderwendel gibt es verschiedene Möglichkeiten. Hierzu kann die Förderwendel eine Vertiefung oder eine Durchbrechung aufweisen, in die der Anschlag eingreift, wenn der ordnungsgemäße Anstellwinkel erreicht ist. Eine einfachere Ausführungsform besteht darin, daß sich der betreffende der Schneide oder dem Schneidenabschnitt zugeordnete Anschlag am Rand der Förderwendel abstützt, so daß die zusätzliche Anbringung einer Durchbrechung an der Förderwendel entfällt. Die Anzahl der Anschläge an einer Klinge beträgt mindestens zwei, vorzugsweise jedoch mindestens drei. Drei solcher Anschläge ergeben eine gesicherte Auflage der Klinge an der unebenen Fläche der Förderwendel, d. h. trotz der unebenen Fläche der Förderwendel gelingt es, die Klinge stabil gegenüber dieser Fläche zu halten. Von besonderer Bedeutung ist die Ausbildung des Befestigungsmittels der Klinge, welches ein entsprechendes Loch in der Förderwendel und eine mittige Durchbrechung in der Klinge durchsetzt. Das Befestigungsmittel weist eine Schraube-Mutter-Verbindung oder eine Nietverbindung auf.

Die Klinge kann fest, aber lösbar, auf dem Rand der Förderwendel gelagert sein. Es ist aber auch möglich, die Klinge unter Zwischenschaltung eines federnden Elementes an der Förderwendel zu befestigen, wobei das federnde Element einen größeren Federweg als die wirksame Tiefe des Anschlages aufweist. Ein bedeutsames Element des Befestigungsmittels ist also ein federndes Element, so daß die Klinge an ihrer Anordnungsstelle nicht fest, sondern federnd angeordnet ist. Freilich ist die Kraft dieses federnden Elementes so bemessen, daß die während des Betriebes der Mischschnecke auftretenden Kräfte nicht in der Lage sind, die Klinge selbsttätig zu verdrehen. Andererseits bietet aber dieses federnde Element die Möglichkeit, die Klinge unter Verwendung eines hebelartigen Werkzeuges gegen den Federweg des federnden Elementes so von der Förderwendel abzukippen und zu verdrehen, daß der nächste Anschlag wirksam wird, der dann wiederum den Anstellwinkel einer neuen, noch nicht gebrauchten Schneide oder eines Schneidenabschnittes der Klinge sichert. Bei einem derartigen Schneidenwechsel genügt unter Umständen eine geringfügige Verdrehung der Klinge nach dem Ausheben des den Anstellwinkel sichernden Anschlages, wobei man es den beim erneuten Betrieb der Mischschnecke einwirkenden Widerstandskräften überläßt, die Klingen solange zu verdrehen, bis der nächste Anschlag die weitere Verdrehung blockiert bzw. sichert. Das Federelement besitzt einen Federweg, der zumindest gleich, vorzugsweise geringfügig größer als die wirksame Eingreiftiefe des Anschlages in eine Durchbrechung der Förderwendel oder relativ zum Rand der Förderwendel ausgebildet ist. Der besondere Vorteil dieser Befestigungsart besteht darin, daß beim Schneidenwechsel das Befestigungselement nicht gelöst werden muß, sondern lediglich der Federweg des federnden Elementes genutzt wird. Wenn also beispielsweise Schraube-Mutter-Verbindung mit einer selbst sichernden Mutter als Befestigungsmittel eingesetzt wird, entsteht der Vorteil, daß bei einem Schneidenwechsel die Sicherungskraft der selbstsichernden Mutter nicht beeinträchtigt wird. Ein solcher Schneidenwechsel kann mit einem relativ lang gestalteten hebelartigen Werkzeug vorgenommen werden, so daß das gefährliche Einsteigen in den Innenraum des Futtermischwagens vermieden wird.

Das Befestigungsmittel kann eine sich durch die Durchbrechung in der Klinge erstreckende Schraube-Mutter-Verbindung oder Nietverbindung für die Befestigung der Klinge auf der Förderwendel aufweisen.

Ein derart ausgebildetes Befestigungsmittel wird nur dann betätigt, d. h. gelöst oder angezogen, wenn eine komplett neue Klinge montiert wird, beispielsweise bei der Erstausrüstung des Futtermischwagens oder dann, wenn sämtliche Klingen mit ihren Schneiden und Schneidenabschnitten stumpf sind und ausgetauscht werden müssen.

Das federnde Element kann auf der freien Außenseite der Förderwendel und/oder auf der freien Außenseite der Klinge vorgesehen sein. Das federnde Element ist also immer so angeordnet, daß es die Klinge gegen die Förderwendel zieht und damit den Eingriff des gerade wirksamen Anschlages sichert und gleichzeitig die übrigen Anschläge gegen die unrunde Fläche der Förderwendel abstützt. Das federnde Element kann also nicht zwischen Förderwendel und Klinge angeordnet sein. Es erscheint aber auch durchaus sinnvoll und möglich, zwei federnde Elemente in Verbindung mit einem Befestigungsmittel vorzusehen.

Die Anschläge an der Klinge können auf einem Umfangskreis um die Durchbrechung in der Klinge angeordnet sein, dessen Radius größer als der Abstand des Loches vom Rand der Förderwendel ist, so daß sich der den Anstellwinkel sichernde Anschlag der Klinge außen am Rand der Förderwendel abstützt. Dies ist eine besonders einfache Ausführungsform. Es entfällt die Anordnung eines zweiten Loches an der Förderwendel. Wenn die Klinge sich gerade erstreckende Schneiden aufweist, stimmt die Anzahl der Anschläge mit der Anzahl der Schneiden überein. Bei einer runden Klinge, die also eine über den Umfang durchgehende Schneide besitzt, werden gedanklich aus dieser Schneide mehrere Schneidenabschnitte gebildet, denen dann eine Mehrzahl von Anschlägen zugeordnet sind. Die Anzahl der Anschläge kann gerade oder ungerade sein.

Als Befestigungsmittel kann eine Schraube mit selbstsichernder Mutter und als federndes Element eine Feder vorgesehen sein. Auch anders ausgebildete Befestigungsmittel sind denkbar, insbesondere solche, die nur durch Zerstörung gelöst werden können. In der Regel ist nach einem mehrfachen Schneidenwechsel die Befestigung der Klinge durch Verschleiß derart beansprucht, daß zugleich mit dem Klingenwechsel auch eine neue Befestigungseinrichtung eingesetzt werden sollte.

In einer bevorzugten Ausführungsform kann die Klinge drei Anschläge und dementsprechend drei Schneiden aufweisen, von denen zwei an der Anlagefläche der Förderwendel und einer am Rand der Förderwendel anliegen. Im allgemeinen genügt es, drei Anschläge gleichmäßig über den Umfang verteilt anzuordnen, so daß drei Schneiden oder drei Schneidenabschnitte innerhalb des Schneidenwechsels genutzt werden können. In der Regel steht auch ein Drittel der Klinge über den Rand der Förderwendel über, wo es einem besonderen Verschleiß ausgesetzt ist, so daß nach einem dreifachen Schneidenwechsel ein Klingenwechsel erforderlich wird. Außerdem wird bei dieser Ausführungsform die Dreipunktauflage innerhalb der federnden Abstützung der Klinge genutzt.

Die Anschläge können aus Prägungen an der Klinge bestehen. Solche Prägungen werden während der Herstellung der Klinge mit eingeformt. Die Prägungen können im Stanzwerkzeug für die Klingen untergebracht werden. Eine andere Möglichkeit besteht darin, Anschläge aus Materialstücken auf der entsprechenden Seite der Klinge zu befestigen, beispielsweise durch Schweißen. Dies erhöht jedoch den Aufwand. Man kann die Anzahl der Anschläge auch gering halten und stattdessen zusätzlich zu dem Loch für das Befestigungsmittel mehrere weitere Löcher im Rand der Förderwendel vorsehen, in die jeweils ein Anschlag in verschiedenen Stellungen eingreifen kann. Auch diese Ausführungsform ist mit einigem Aufwand verbunden.

Sinnvoll ist es, wenn eine Schutzhülse für das federnde Element vorgesehen ist. Die Anordnung dieser Schutzhülse, die aus einem tiefgezogenen Metallteil bestehen kann, wirkt sich in mehrfacher Hinsicht vorteilhaft aus. Sie schützt das federnde Element und verhindert das Eindringen oder Zusetzen der Zwischenräume des federnden Elementes mit Futterresten. Insbesondere wenn die Schutzhülse einer Mutter mit Bund zugeordnet ist, kann die Dimensionierung und Abstimmung der Schutzhülse und der Mutter mit Bund so getroffen sein, daß die Schutzhülse zugleich eine Anziehbegrenzung beim Festdrehen der Mutter bildet, so daß damit der erforderliche Federweg des federnden Elementes verläßlich eingestellt wird. Es wird damit verhindert, daß die Mutter zu weit angezogen wird und unter Umständen das federnde Element zu weit zusammengedrückt wird, so daß die beabsichtigte Schneidenverstellung nicht mehr möglich ist.

Schließlich besteht noch die Möglichkeit, daß die Anschläge auf beiden Seiten der Klinge verteilt angeordnet sind. Eine solche Ausbildung kann insbesondere dann sinnvoll sein, wenn eine geradlinige Anzahl von Schneiden an der Klinge vorgesehen ist und die Klingen bei einem Zwischenwechsel zwischen mehreren Schneidenwechseln um 180° gewendet relativ zur Förderwendel eingesetzt und genutzt werden sollen. Dabei ist dann freilich das Lösen des Befestigungsmittels erforderlich. Eine solche Ausbildungsform mag sinnvoll sein, wenn beispielsweise die Schneiden in zwei verschiedenen Richtungen abgenutzt werden können oder sollen.

Die Erfindung wird anhand bevorzugter Ausführungsbeispiele weiter beschrieben. Die Zeichnungen zeigen:
- Fig. 1: eine Schnittdarstellung eines Teils einer Mischschnecke mit befestigter Klinge in einer ersten Ausführungsform,
- Fig. 2: eine Schnittdarstellung der Mischschnecke mit befestigter Klinge in einer zweiten Ausführungsform,
- Fig. 3: eine Draufsicht auf eine an der Förderwendel befestigte Klinge,
- Fig. 4: eine Draufsicht auf eine weitere Ausführungsform der Klinge, und
- Fig. 5: eine Draufsicht auf eine an der Förderwendel befestigte Klinge mit vier Schneiden.

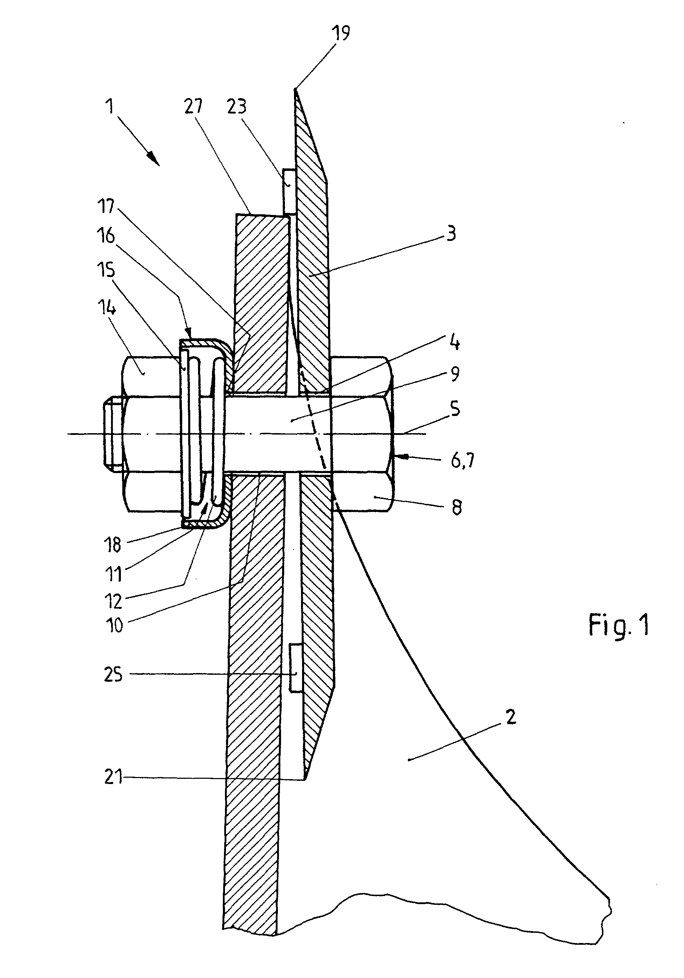

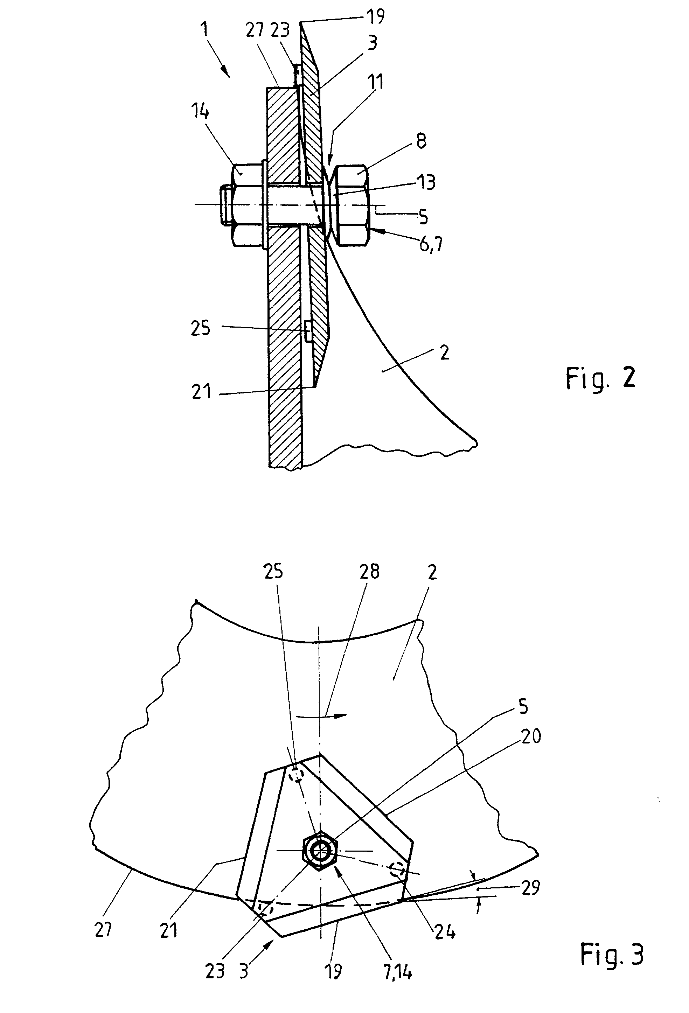

In Fig. 1 ist ein Teil einer Mischschnecke 1 mit einer Förderwendel 2 und mit einer im Randbereich der Förderwendel 2 befestigten Klinge 3 dargestellt. Die Klinge 3 weist eine Durchbrechung 4 auf, die sich konzentrisch zu einer Symmetrieachse 5 des Befestigungsmittels 6 erstreckt. Die Klinge 3 ist an der Förderwendel 2 mit einem Befestigungsmittel 6 befestigt. Das Befestigungsmittel 6 weist eine Schraube 7 mit Schraubenkopf 8 und Schraubenschaft 9 auf. Der Schraubenschaft 9 erstreckt sich durch die Durchbrechung 4 und ein Loch 10 in der Förderwendel 2. Zu dem Befestigungsmittel 6 gehört auch ein federndes Element 11, z. B. in Form einer zylinderfeder 12, wie in Fig. 1 dargestellt. Fig. 2 zeigt ein federndes Element 11 in Form mehrerer Tellerfedern 13. Die Fig. 1 und 2 zeigen zugleich die Anordnungsmöglichkeiten für die federnden Elemente 11, die entweder auf der freien Außenseite der Förderwendel 2 oder auf der freien Außenseite der Klinge 3 plaziert sind bzw. anliegen. Zu der Schraube 7 gehört eine Mutter 14, die auf das Gewinde des Schraubenschaftes 9 aufgeschraubt ist. Die Mutter 14 ist insbesondere als selbstsichernde Mutter ausgebildet oder mit einer entsprechenden Verdrehsicherung versehen. Die Mutter 14 kann einen Bund 15 aufweisen, an dessen Fläche sich das federnde Element 11 abstützt.

Wie Fig. 1 erkennen läßt, ist es möglich, das federnde Element 11 innerhalb einer Schutzhülse 16 unterzubringen, die eine Durchbrechung 17 aufweist, mit deren Hilfe die Schutzhülse 16 ebenfalls auf dem Schraubenschaft 9 der Schraube 7 gelagert ist. Die Schutzhülse 16 weist einen axial abstehenden Kragen 18 auf, der in axialer Richtung sowie im Durchmesser so bemessen ist, daß er mit dem Bund 15 der Mutter 14 zusammenarbeitet. Einerseits umschließt der Kragen 18 der Schutzhülse 16 den Bund 15 der Mutter 14 mit einem relativ eng gewählten Spalt, der das Eindringen von Futterresten und damit das Zusetzen des federnden Elementes 11 vermeidet. Andererseits dient die axiale Erstreckung des Kragens 18 als Montagehilfe beim Anziehen der Mutter 14 relativ zur Schraube 7. Wenn der Bund 15, wie dies Fig. 1 erkennen läßt, in den Kragen 18 eingedrungen ist, wird der Aufschraubvorgang der Mutter 14 beendet, und es ist verläßlich der erforderliche Federweg des federnden Elementes 11 eingestellt.

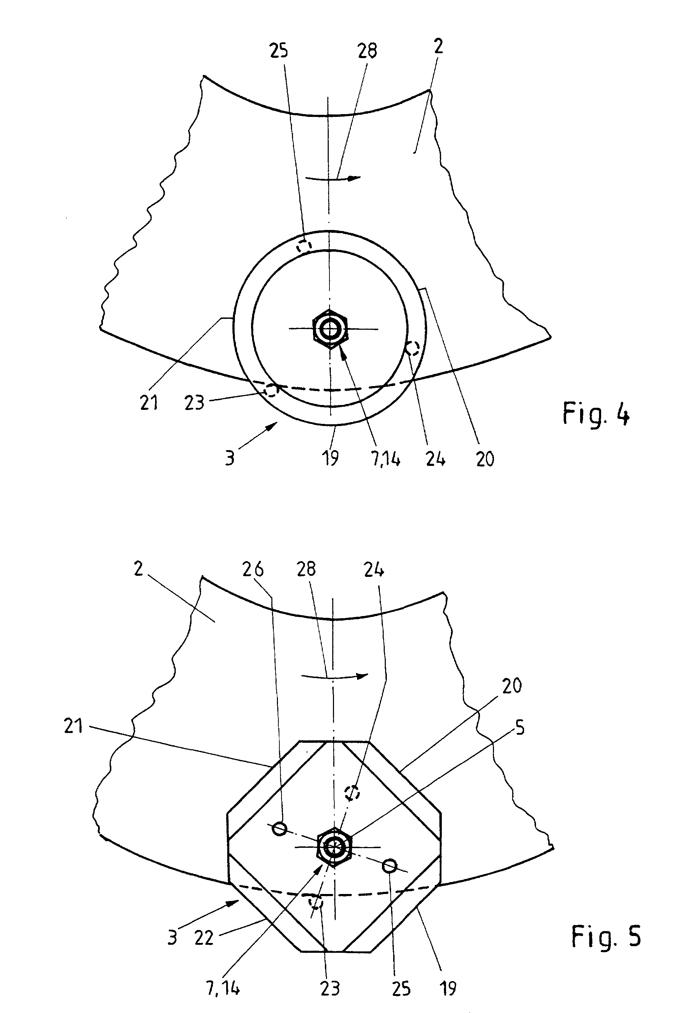

Jede Klinge 3 besitzt mehrere Schneiden 19, 20 usw., die durch entsprechende Schneidwarten an der Klinge 3 gebildet und gleichmäßig über den Umfang verteilt angeordnet sind. So zeigt beispielsweise Fig. 3 drei Schneiden 19, 20, 21, die gleichmäßig über den Umfang verteilt angeordnet sind. Fig. 4 zeigt eine runde Klinge, bei der die Schneiden 19, 20, 21 von Schneidenabschnitten gebildet sind. Fig. 5 zeigt eine Klinge 3 mit vier Schneiden 19, 20, 21 und 22, die gleichmäßig über den Umfang der Klinge 3 verteilt angeordnet sind.

An der Klinge 3 sind Anschläge 23, 24 usw. vorgesehen. Jeder Anschlag 23, 24 usw. ist je einer Schneide 19, 20 usw. zugeordnet. So läßt Fig. 3 beispielsweise erkennen, daß der Anschlag 23 der Schneide 19 zugeordnet ist. Wenn die Schneide 19 in Arbeitsstellung gebracht ist, also über den Rand 27 der Förderwendel 2 vorstehend vorgesehen ist, stützt sich der Anschlag 23 an diesem Rand 27 der Förderwendel 2 ab und verhindert ein Durchdrehen der Klinge um die Achse 5. Die zugehörige Drehrichtung bzw. Umlaufrichtung der Förderwendel 2 ist durch einen Pfeil 28 gekennzeichnet. Auch Fig. 1 läßt erkennen, wie sich der Anschlag 23 auf dem Rand 27 der Förderwendel 2 abstützt, so daß die Klinge 3 in diesem Zustand verdrehsicher gelagert ist. Man erkennt auch aus den Fig. 1 und 3, daß sich die Anschläge 24 und 25 in dieser Stellung auf der unebenen Oberfläche der Förderwendel 2 abstützen, so daß die Klinge 3 zwar federnd, aber dennoch gehalten in ihrer Richtung auf der Förderwendel 2 gelagert ist. Der Anschlag 23 bestimmt gleichzeitig den Anstellwinkel 29, mit welchem die Schneide 19 gegenüber der Tangente an den Rand 27 der Förderwendel 2 positioniert ist.

Man kann sich anhand der Fig. 1 und 3 leicht vorstellen, daß es durch Ansatz eines hebelartig wirkenden Werkzeuges zwischen der Klinge 3 und dem Rand 27 der Förderwendel 2 leicht möglich ist, einen Kippvorgang auf die Klinge 3 auszuüben, wobei das federnde Element 11 zusammengedrückt wird, bis der Federweg des federnden Elementes 11 aufgebraucht ist bzw. der Anschlag 23 von dem Rand 27 freigekommen ist. Da die Förderwendel 2 eine unebene Fläche bildet, gegen die die mit einer ebenen Fläche ausgebildete Klinge 3 anliegt, befindet sich zumindest bereichsweise benachbart zu dem Rand 27 bzw. dem Anschlag 23 immer Luft bzw. ein Abstand, in den das hebelartig wirkende Werkzeug eingreifen kann. Wenn man dann bei einem Schneidenwechsel noch dafür sorgt, daß in der abgekippten Stellung der Anschlag 23 auf der unebenen Fläche der Förderwendel 2 aufsetzt, kann man es den bei der Benutzung der Förderschnecke auftretenden Kräften überlassen, die Klinge 3 um 120° weiterzudrehen, bis der Anschlag 24 die Stelle des Anschlages 23 (Fig. 3) einnimmt. Damit ist dann gleichzeitig die Schneide 20 hinsichtlich des Anstellwinkels 29 gesichert. Es ist aber auch möglich, den Schneidenwechsel so durchzuführen, daß zumindest der Anschlag 24 von der Fläche der Förderwendel 2 freikommt. Es versteht sich, daß auch ein vollständiges Drehen um 120° natürlich möglich ist. Die Anschläge 23, 24 usw. besitzen eine wirksame Tiefe, also eine Überdeckung mit dem Rand 27 der Förderwendel 2, die kleiner oder allenfalls gleich dem ausnutzbaren Federweg des federnden Elementes 11 ist.

Das Ausführungsbeispiel der runden Klinge gemäß Fig. 4 ist an sich ähnlich gestaltet wie das Ausführungsbeispiel der Fig. 3, d. h. es weist ebenfalls drei Anschläge 23, 24, 25 auf. Auf die Beschreibung von Fig. 3 kann insoweit verwiesen werden. Bei dieser runden Klinge 3 gemäß Fig. 4 könnten auch mehr als drei Anschläge vorgesehen sein.

Fig. 5 zeigt schließlich noch ein Ausführungsbeispiel, bei dem die Anschläge in der aus der Zeichnung ersichtlichen Weise auf beide Seiten der Klinge verteilt angeordnet sind. Auf der der Förderwendel 2 abgekehrten Seite sind die Anschläge 25 und 26 vorgesehen, während auf der anderen, der Förderwendel 2 zugekehrten Seite der Klinge 3 die Anschläge 23 und 24 angeordnet sind. Es ist erkennbar, daß in der gezeigten Darstellung der Anschlag 23 die Verdrehsicherung der Klinge 3 bildet und die Schneide 19 in Arbeitsstellung ist. Die Anzahl der Anschläge 23, 24 usw. könnte hier auch noch erhöht, beispielsweise verdoppelt werden.

Abschließend sei noch darauf hingewiesen, daß gleichzeitig auch mehrere federnde Elemente 11 vorgesehen sein können. So kann ein federndes Element gemäß Fig. 1 mit einem federnden Element 11 gemäß Fig. 2 kombiniert vorgesehen sein, wobei zweckmäßig entweder nur Zylinderfedern 12 oder nur Tellerfedern 13 eingesetzt werden. Auch die Tellerfedern 13 können mit einer Schutzhülse 16 geschützt werden.

### BEZUGSZEICHENLISTE

- 1 -: Mischschnecke
- 2 -: Förderwendel
- 3 -: Klinge
- 4 -: Durchbrechung
- 5 -: Symmetrieachse
- 6 -: Befestigungsmittel
- 7 -: Schraube
- 8 -: Schaubenkopf
- 9 -: Schraubenschaft
- 10 -: Loch
- 11 -: federndes Element
- 12 -: Zylinderfeder
- 13 -: Tellerfeder
- 14 -: Mutter
- 15 -: Bund
- 16 -: Schutzhülse
- 17 -: Durchbrechung
- 18 -: Kragen
- 19 -: Schneide
- 20 -: Schneide
- 21 -: Schneide
- 22 -: Schneide
- 23 -: Anschlag
- 24 -: Anschlag
- 25 -: Anschlag
- 26 -: Anschlag
- 27 -: Rand
- 28 -: Pfeil
- 29 -: Anstellwinkel

## Patentansprüche

1. Klinge (3) für die Befestigung an einer im Randbereich mit Löchern (10) versehenen Förderwendel (2) einer Mischschnecke (1), insbesondere einer Mischschnecke in einem Futtermischwagen, wobei die Klinge (3) eine Durchbrechung (4) für ein Befestigungsmittel (6) und mindestens zwei Schneiden (19, 20) oder Schneidenabschitte aufweist, **dadurch gekennzeichnet, daß** die Klinge (3) zumindest auf der der Förderwendel (2) zugekehrten Seite mehrere vorspringende und über die Klinge (3) verteilt angeordnete Anschläge (23, 24) aufweist, die in Zuordnung zu den Schneiden (19, 20) oder Schneidenabschnitten der Klinge (3) unter Festlegung eines für das Schneiden günstigen Anstellwinkels (29) der Schneiden (19, 20) oder Schneidenabschnitte der Klinge (3) verteilt angeordnet sind und von denen sich jeweils einer (23) in der montierten Stellung an der Förderwendel (2) formschlüssig verdrehgesichert abstützt und so den Anstellwinkel (29) der jeweils in Arbeit befindlichen Schneide (19) sichert.

2. Klinge nach Anspruch 1, **dadurch gekennzeichnet, daß** die Klinge (3) unter Zwischenschaltung eines federnden Elementes (11) an der Förderwendel (2) befestigbar ist, wobei das federnde Element (11) einen größeren Federweg als die wirksame Tiefe des Anschlages (23) aufweist.

3. Klinge nach Anspruch 1, **dadurch gekennzeichnet, daß** das Befestigungsmittel (6) eine sich durch die Durchbrechung (4) in der Klinge (3) erstreckende Schraube-Mutter-Verbindung (7, 14) oder Nietverbindung für die Befestigung der Klinge (3) auf der Förderwendel (2) aufweist.

4. Klinge nach Anspruch 1, **dadurch gekennzeichnet, daß** das federnde Element (11) auf der freien Außenseite der Förderwendel (2) und/oder auf der freien Außenseite der Klinge (3) vorgesehen ist.

5. Klinge nach Anspruch 1, **dadurch gekennzeichnet, daß** die Anschläge (23, 24, 25) an der Klinge (3) auf einem Umfangskreis um die Durchbrechung (4) in der Klinge (3) angeordnet sind, dessen Radius größer als der Abstand des Loches (10) vom Rand (27) der Förderwendel (2) ist, so daß sich der den Anstellwinkel (29) sichernde Anschlag (23; 24; 25) der Klinge (3) außen am Rand (27) der Förderwendel (2) abstützt.

6. Klinge nach Anspruch 1 oder 2, **dadurch gekennzeichnet, daß** als Befestigungsmittel (6) eine Schraube (7) mit selbstsichernder Mutter (14) vorgesehen ist.

7. Klinge nach einem der Ansprüche 1 bis 6, **dadurch gekennzeichnet, daß** als federndes Element (11) eine Feder (12, 13) vorgesehen ist.

8. Klinge nach einem der Ansprüche 1 bis 7, **dadurch gekennzeichnet, daß** die Klinge (3) drei Anschläge (23, 24, 25) und dementsprechend drei Schneiden (19, 20, 21) aufweist, von denen zwei (24, 25) an der Anlagefläche der Förderwendel (2) und einer (23) am Rand (27) der Förderwendel (2) anliegen.

9. Klinge nach Anspruch 1 oder 8, **dadurch gekennzeichnet, daß** die Anschläge (23, 24 usw.) aus Prägungen an der Klinge (3) bestehen.

10. Klinge nach Anspruch 1, **dadurch gekennzeichnet, daß** eine Schutzhülse (16) für das federnde Element (11) vorgesehen ist.

11. Klinge nach Anspruch 10, **dadurch gekennzeichnet, daß** die Schutzhülse (16) einer Mutter (14) mit Bund (15) zugeordnet ist.

12. Klinge nach einem der Anspüche 1 bis 11, **dadurch gekennzeichnet, daß** die Anschläge (23, 24; 25, 26) auf beiden Seiten der Klinge (3) verteilt angeordnet sind.

## Claims

1. A cutter blade (3) to be connected to a conveying spiral (2) of a mixing screw (1), especially a mixing screw in a fodder-mixing trailer, the conveying spiral (2) including holes (10) being located in the edge portion of the conveying spiral (2), the cutter blade (3) including an opening (4) for a fixing means (6) and at least two cutting edges (19, 20) or cutting edge sections, **characterized in that** the cutting blade (3) at least at the side facing the conveying spiral (2) includes a plurality of stops (23, 24) being designed to protrude and to be spaced apart the cutting blade (3), the stops (23, 24) being arranged in a spaced apart manner in association to the cutting edges (19, 20) or the cutting edge sections of the cutting blade (3) by determining an angle of attack (29) of the cutting edges (19, 20) or of the cutting edge sections of the cutter blade (3) which is positive for cutting, one of the stops (23) in the mounted position being supported at the conveying spiral (2) by form-fit to be unrotatable to secure the angle of attack (29) of the respective active cutting edge (19).

2. The cutter blade of claim 1, **characterized in that** the cutter blade (3) is connectable to the conveying spiral (2) by an intermediate arrangement of a resilient element (11), the resilient element (11) having a greater spring excursion than the effective depth of the stop (23).

3. The cutter blade of claim 1, **characterized in that** the fixing means (6) includes a screw nut connection (7, 14) or a rivet connection extending through the opening (4) in the cutter blade (3) for fixing the cutter blade (3) on the conveying spiral (2).

4. The cutter blade of claim 1, **characterized in that** the resilient element (11) is provided on the free outer side of the conveying spiral (2) and/or on the free outer side of the cutter blade (3).

5. The cutter blade of claim 1, **characterized in that** the stops (23, 24, 25) at the cutter blade (3) are arranged on a circumferential circuit about the opening (4) in the cutter blade (3) the radius of which is more than the distance of the hole (10) from the edge (27) of the conveying spiral (2) such that the stop (23; 24; 25) of the cutter blade (3) securing the angle of attack (29) is supported outside at the edge (27) of the conveying spiral (2).

6. The cutter blade of claim 1 or 2, **characterized in that** a screw (7) including a self-securing nut (14) is provided as fixing means (6).

7. The cutter blade of one of claims 1 to 6, **characterized in that** a spring (12, 13) is provided as resilient element (11).

8. The cutter blade of one of claims 1 to 7, **characterized in that** the cutter blade (3) includes three stops (23, 24, 25) and respectively three cutting edges (19, 20, 21) of which two (24, 25) closely contact the contact surface of the conveying spiral (2) and of which one (23) closely contacts the edge (27) of the conveying spiral (2).

9. The cutter blade of claim 1 or 8, **characterized in that** the stops (23, 24 and so forth) are designed as imprints at the cutter blade (3).

10. The cutter blade of claim 1, **characterized in that** a protecting bush (16) for the resilient element (11) is provided.

11. The cutter blade of claim 10, **characterized in that** the protecting bush (16) is associated with a nut (14) including a collar (15).

12. The cutter blade of one of claims 1 to 11, **characterized in that** the stops (23, 24; 25, 26) are arranged at both sides of the cutter blade (23) in a spaced apart manner.

## Revendications

1. Lame de coupe (3) pour la fixation à une hélice transporteuse (2), munie de trous (10) dans la zone périphérique, d'une vis mélangeuse, en particulier d'une vis mélangeuse dans une remorque mélangeuse de fourrage, la lame de coupe (3) présentant une découpure (4) pour un organe de fixation (6) et au moins deux tranchants (19, 20) ou sections de tranchant,
**caractérisée en ce que** la lame de coupe (3) présente, au moins du côté tourné vers l'hélice transporteuse (2), plusieurs butées (23, 24) saillantes et disposées réparties sur la lame de coupe (3), qui sont disposées réparties en affectation aux tranchants (19, 20) ou aux sections de tranchant de la lame de coupe (3) en déterminant un angle d'attaque (29) favorable pour la coupe des tranchants (19, 20) ou des sections de tranchant de la lame de coupe (3) et parmi lesquelles une (23) respective s'appuie respectivement, en position montée, fixée en rotation à coopération de forme à l'hélice transporteuse (2) et assure ainsi l'angle d'attaque (29) du tranchant (19) se trouvant respectivement en travail.

2. Lame de coupe selon la revendication 1,
**caractérisée en ce que** la lame de coupe (3) peut être fixée à l'hélice transporteuse (2) avec interposition d'un élément élastique (11), l'élément élastique (11) ayant une course élastique supérieure à la profondeur active de la butée (23).

3. Lame de coupe selon la revendication 1,
**caractérisée en ce que** l'organe de fixation (6) présente une liaison vis-écrou (7, 14) ou une liaison rivée s'étendant à travers la découpure (4) dans la lame de coupe (3) pour la fixation de la lame de coupe (3) sur l'hélice transporteuse (2).

4. Lame de coupe selon la revendication 1,
**caractérisée en ce que** l'élément élastique (11) est disposé sur le côté extérieur libre de l'hélice transporteuse (2) et/ou sur le côté extérieur libre de la lame de coupe (3).

5. Lame de coupe selon la revendication 1,
**caractérisée en ce que** les butées (23, 24, 25) sur la lame de coupe (3) sont disposées sur un cercle périphérique autour de la découpure (4) dans la lame de coupe (3), dont le rayon est supérieur à la distance du trou (10) au bord (27) de l'hélice transporteuse (2), de telle sorte que la butée (23 ; 24 ; 25) de la lame de coupe (3) assurant l'angle d'attaque (29) s'appuie extérieurement sur le bord (27) de l'hélice transporteuse (2).

6. Lame de coupe selon la revendication 1 ou 2,
**caractérisée en ce qu'**une vis (7) à écrou indesserrable (14) est prévue comme organe de fixation (6).

7. Lame de coupe selon l'une des revendications 1 à 6,
**caractérisée en ce qu'**un ressort (12, 13) est prévu comme élément élastique (11).

8. Lame de coupe selon l'une des revendications 1 à 7,
**caractérisée en ce que** la lame de coupe (3) présente trois butées (23, 24, 25) et trois tranchants (19, 20, 21) leur correspondant, parmi lesquelles deux (24, 25) sont adjacentes à la surface d'appui de l'hélice transporteuse (2) et une (23) au bord (27) de l'hélice transporteuse (2).

9. Lame de coupe selon la revendication 1 ou 8,
**caractérisée en ce que** les butées (23, 24, etc.) sont constituées par des estampages dans la lame de coupe (3).

10. Lame de coupe selon la revendication 1,
**caractérisée en ce qu'**une douille protectrice (16) est prévue pour l'élément élastique (11).

11. Lame. de coupe selon la revendication 10,
**caractérisée en ce qu'**un écrou (14) à collet (15) est adjoint à la douille protectrice (16).

12. Lame de coupe selon l'une des revendications 1 à 11,
**caractérisée en ce que** les butées (23, 24 ; 25, 26) sont disposées réparties sur les deux côtés de la lame de coupe (3).
